(19) Europäisches Patentamt

European Patent Office

Office européen des brevets

(11) EP 1 288 674 B1

## (12) FASCICULE DE BREVET EUROPEEN

(45) Date de publication et mention
de la délivrance du brevet:
**15.02.2006 Bulletin 2006/07**

(51) Int Cl.:
***G01S 11/02*** *(2006.01)*     ***H04L 25/02*** *(2006.01)*

(21) Numéro de dépôt: **01120682.8**

(22) Date de dépôt: **03.09.2001**

(54) **Procédé et dispositif d'estimation de la vitesse de déplacement d'un terminal mobile d'un système de communication sans fil**

Verfahren und Gerät zur Geschwindigkeitsschätzung eines mobilen Endgeräts in einem drahtlosen Kommunikationssystem

Method and device of speed estimation of a mobile terminal of a wireless communication system

(84) Etats contractants désignés:
**DE FR GB IT**

(43) Date de publication de la demande:
**05.03.2003 Bulletin 2003/10**

(73) Titulaire: **STMicroelectronics N.V.**
**1077 XX Amsterdam (NL)**

(72) Inventeur: **Chappaz, David**
**74160 Saint Julien en Genevois (FR)**

(74) Mandataire: **Dossmann, Gérard**
**Bureau D.A. Casalonga-Josse**
**Paul-Heyse-Strasse 33**
**80336 München (DE)**

(56) Documents cités:
**EP-A- 1 052 820**     **WO-A-98/16079**
**DE-A- 19 923 690**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne la transmission d'informations numériques, notamment mais non exclusivement dans le domaine du téléphone mobile cellulaire tel que celui prévu dans le système GSM.

L'invention concerne plus particulièrement l'estimation de la vitesse de déplacement d'un terminal mobile, en particulier un téléphone mobile cellulaire, dialoguant avec une station par l'intermédiaire d'un canal de transmission qui véhicule les informations entre le terminal et la station via un moyen de propagation. Ce moyen de propagation peut être de l'air dans le cas des téléphones mobiles cellulaires. L'état de la technique est illustré par DE 199 23 690 A1, avec les caractéristiques du préambule de la revendication 1.

Chaque station de base du système de communication rayonne dans une cellule et dialogue par conséquent avec tous les téléphones qui se situent dans cette cellule. Lorsque l'utilisateur d'un téléphone se déplace pour venir en bordure de cellule, la station de base peut décider, en fonction de paramètres spécifiques mesurés par le téléphone, de passer la main à une autre station de base.

Or, l'estimation de la vitesse de déplacement du téléphone mobile est un paramètre qui peut être pris en compte par la station de base pour sa prise de décision quant au transfert vers une autre station de base.

L'invention apporte une solution au problème de l'estimation de la vitesse de déplacement d'un terminal mobile.

L'invention propose donc un procédé d'estimation de la vitesse de déplacement d'un terminal mobile d'un système de communication sans fil dialoguant avec une station par l'intermédiaire d'un canal de transmission. Selon ce procédé, l'estimation de la vitesse comporte une estimation de la réponse impulsionnelle du canal de transmission à un instant donné, une estimation de la dérivée temporelle de cette réponse impulsionnelle estimée, et une détermination d'un rapport comportant un dénominateur prenant en compte l'énergie de la réponse impulsionnelle estimée et un numérateur prenant en compte l'énergie de la dérivée temporelle estimée de cette réponse impulsionnelle.

En d'autres termes, selon l'invention, la vitesse du mobile est estimée en déterminant un rapport de deux énergies, relatives à la réponse impulsionnelle du canal et à sa dérivée temporelle.

L'estimation de la réponse impulsionnelle du canal et l'estimation de sa dérivée temporelle peuvent être effectuées de différentes façons.

Ainsi, selon une première variante de l'invention, l'estimation de la réponse impulsionnelle du canal est effectuée par la moyenne de deux estimations successives indépendantes de la réponse impulsionnelle du canal temporellement séparées d'une durée prédéterminée choisie de façon à préserver une corrélation entre les deux réponses impulsionnelles successivement estimées.

Par ailleurs, l'estimation de la dérive temporelle s'effectue alors par la détermination de la variation temporelle sur ladite durée prédéterminée, entre les deux estimations successives indépendantes de la réponse impulsionnelle.

L'homme du métier saura ajuster cette durée prédéterminée en fonction notamment de la fréquence Döppler.

A titre indicatif, on peut choisir une durée prédéterminée T telle que le produit de cette durée prédéterminée T par la fréquence Döppler Fd soit inférieur ou égal à 10. On rappelle ici que la fréquence Döppler Fd est égale à F0.V/C, où F0 désigne la fréquence porteuse des informations véhiculées sur le canal, V désigne la vitesse de déplacement du terminal mobile, et C la vitesse de la lumière.

Lorsque le canal de transmission est temporellement subdivisé en trames comportant chacune plusieurs intervalles temporels, la transmission des informations entre la station de base et le terminal peut s'effectuer sur des trames successives au sein d'au moins deux intervalles temporels consécutifs de chacune trame. Dans ce cas, les deux estimations successives indépendantes de la réponse impulsionnelle du canal peuvent être respectivement effectuées à partir des informations respectivement reçues au cours des deux intervalles temporels consécutifs. La corrélation entre les deux réponses impulsionnelles successivement estimées est alors préservée.

Selon une autre variante de l'invention, qui s'applique également au cas où la transmission des informations s'effectue sur des trames successives au sein d'au moins deux intervalles temporels consécutifs de chaque trame, l'estimation de la réponse impulsionnelle du canal et l'estimation de cette dérivée temporelle peuvent être effectuées conjointement à partir des informations reçues au cours des deux intervalles consécutifs. Une telle estimation conjointe peut s'effectuer par exemple en utilisant une technique de résolution dite «des moindres carrés».

Selon une autre variante de l'invention, lorsque la transmission des informations entre la station de base et le terminal s'effectue sur des trames successives au sein d'un seul intervalle temporel de chaque trame, l'estimation de la réponse impulsionnelle du canal et l'estimation de cette dérivée temporelle peuvent s'effectuer à partir des informations reçues au cours de ce seul intervalle temporel. Là encore, on peut utiliser une estimation à partir d'une technique dite «des moindres carrés».

Quelles que soient les variantes de l'invention, le bruit d'estimation sur les coefficients de la réponse impulsionnelle et de sa dérivée entraîne un biais sur l'estimation de leur énergie. Lorsque l'énergie moyenne du bruit d'estimation est connue, il est préférable de retrancher cette énergie pour obtenir des estimations non biaisées. Aussi, est-il préférable, pour déterminer le numérateur et le dénominateur, de retrancher l'énergie moyenne du bruit, des deux valeurs correspondantes d'énergie.

Il est particulièrement avantageux que le dénominateur résulte d'une première moyenne, par exemple une moyenne glissante, de valeurs successives d'énergie correspondant à des réponses impulsionnelles successivement estimées à des instants successifs. Par ailleurs, il est également particulièrement avantageux que le numérateur résulte d'un deuxième moyenne, par exemple une moyenne glissante, de valeurs successives d'énergie correspondant aux dérivées temporelles des réponses impulsionnelles successivement estimées. Ainsi, un tel mode de mise en oeuvre permet de lisser les variations éventuelles d'énergies, occasionnées par le bruit.

L'invention a également pour objet un dispositif d'estimation de la vitesse de déplacement d'un terminal mobile d'un système de communication sans fil dialoguant avec une station par l'intermédiaire d'un canal de transmission, comprenant

- des premiers moyens d'estimation aptes à effectuer une estimation de la réponse impulsionnelle du canal de transmission à un instant donné,
- des deuxièmes moyens d'estimation aptes à effectuer une estimation de la dérivée temporelle de cette réponse impulsionnelle estimée, et
- des moyens d'estimation de vitesse comportant des premiers moyens de détermination aptes à déterminer un dénominateur prenant en compte l'énergie de la réponse impulsionnelle estimée, des deuxièmes moyens de détermination aptes à déterminer un numérateur prenant en compte l'ériergie de la dérivée temporelle estimée de cette réponse impulsionnelle, et des moyens de calcul aptes à effectuer le rapport entre le numérateur et le dénominateur.

Selon un premier mode de réalisation de l'invention, les premiers moyens d'estimation sont aptes à effectuer l'estimation de la réponse impulsionnelle du canal par la moyenne de deux estimations successives de la réponse impulsionnelle du canal temporellement séparées d'une durée prédéterminée choisie de façon à préserver une corrélation entre les deux réponses impulsionnelles successivement estimées.

Par ailleurs, les deuxièmes moyens d'estimation sont aptes à effectuer l'estimation de la dérivée temporelle par la détermination de la variation temporelle sur ladite durée prédéterminée, entre les deux estimations indépendantes successives de la réponse impulsionnelle.

Lorsque le canal de transmission est temporellement subdivisé en trames comportant chacune plusieurs intervalles temporels, et que la transmission des informations entre la station de base et le terminal s'effectue sur les trames successives au sein d'au moins deux intervalles temporels consécutifs de chaque trame, les premiers moyens d'estimation peuvent par exemple effectuer respectivement les deux estimations successives de la réponse impulsionnelle du canal à partir des informations respectivement reçues au cours des deux intervalles temporels consécutifs.

Selon un autre mode de réalisation de l'invention, les premiers moyens d'estimation et les deuxièmes moyens d'estimation peuvent effectuer conjointement l'estimation de la réponse impulsionnelle du canal et l'estimation de sa dérivée temporelle à partir des informations reçues au cours des deux intervalles consécutifs.

Selon un autre mode de réalisation de l'invention, plus particulièrement applicable lorsque la transmission s'effectue au sein d'un seul intervalle temporel de chaque trame, les premiers moyens d'estimation peuvent effectuer l'estimation de la réponse impulsionnelle du canal et de sa dérivée temporelle à partir des informations reçues au cours de ce seul intervalle temporel.

Quels que soient les modes de réalisation de l'invention, lorsque l'énergie moyenne du bruit d'estimation est connue, les premiers et deuxièmes moyens de détermination comportent avantageusement des moyens de soustraction aptes à retrancher des deux valeurs correspondantes d'énergie, l'énergie moyenne du bruit.

Par ailleurs, quel que soit le mode de réalisation utilisé, les premiers, moyens de détermination comportent avantageusement des premiers moyens de lissage aptes à effectuer une première moyenne, par exemple une moyenne glissante, de valeurs successives d'énergie correspondant à des réponses impulsionnelles successivement estimées des instants successifs. De même, les deuxièmes moyens de détermination comportent avantageusement les deuxièmes moyens de lissage aptes à effectuer une deuxième moyenne, par exemple une moyenne glissante, de valeurs successives d'énergie correspondant aux dérivées temporelles des réponses impulsionnelles successivement estimées.

Les moyens de détermination, de calcul et de soustraction peuvent être réalisés de façon fonctionnelle sous forme de blocs logiciels incorporés dans les moyens d'estimation de vitesse.

L'invention a également pour objet un terminal mobile distant d'un système de communication sans fil, comportant un dispositif d'estimation de vitesse tel que défini ci-avant.

L'invention propose également une station de base d'un système de communication sans fil, incorporant un dispositif d'estimation de vitesse tel qu défini ci-avant.

D'autres avantages et caractéristiques de l'invention apparaîtront à l'examen de la description détaillée de modes de réalisation et de mise en oeuvre, nullement limitatifs, et des dessins annexés, sur lesquels :

- la figure 1 illustre schématiquement l'émetteur et un récepteur aptes à mettre en oeuvre le procédé selon l'invention ;

- la figure 2 illustre plus en détail mais toujours schématiquement une partie des moyens du récepteur de la figure 1 ;
- les figures 3 à 5 illustrent schématiquement et partiellement l'obtention des estimations de la réponse impulsionnelle du canal et de sa dérivée temporelle dans trois variantes de mise en oeuvre de l'invention ; et
- la figure 6 illustre schématiquement l'obtention d'une estimation de la vitesse à partir de plusieurs estimations de réponse impulsionnelle et de leurs dérivées temporelles à des instants successifs.

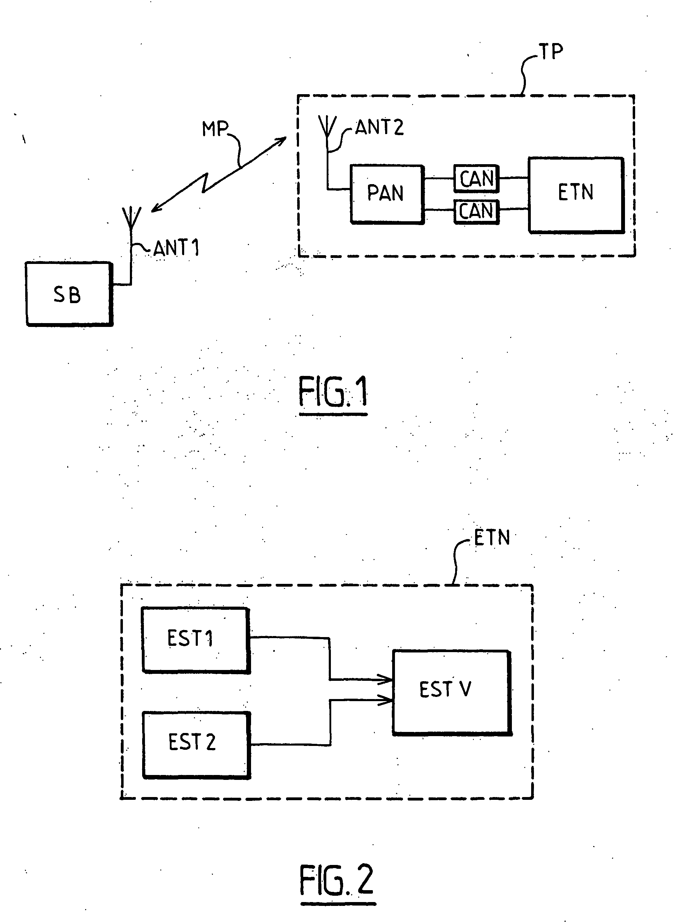

On suppose maintenant, en se référant plus particulièrement à la figure 1, que l'invention s'applique par exemple au domaine des téléphones mobiles cellulaires, par exemple ceux du réseau GSM.

Sur la figure 1, la référence SB désigne un émetteur, par exemple une station de base. Cette station de base reçoit les données utiles à transmettre, par exemple de la parole, et effectue notamment les traitements classiques dits «de codage de canal» en introduisant des redondances dans le flot de données. La station SB comporte également classiquement un modulateur effectuant par exemple une modulation en quadrature du type QPSK, selon une dénomination bien connue de l'homme du métier et transformant le signal binaire issu des traitements de codage de canal, en un signal analogique. Le signal analogique est ensuite filtré dans un filtre d'émission avant d'être émis en direction du récepteur TP via une antenne ANT1.

Le moyen de propagation MP entre la station de base SB et un récepteur TP, constitué ici d'un téléphone mobile cellulaire, est dans le cas présent l'air.

Le téléphone mobile cellulaire TP comporte essentiellement en tête une antenne ANT2 couplée à un étage analogique PAN réalisant essentiellement une conversion de fréquence pour ramener le signal reçu en bande de base, et un filtrage pour ne conserver que la partie utile du spectre.

Après échantillonnage et conversion analogique/numérique dans un convertisseur CAN, l'étage numérique ETN a notamment pour rôle de produire une estimation du canal de transmission, de supprimer grâce à ces estimations l'interférence entre symboles (par une égalisation) et d'effectuer en général une correction d'erreur, c'est-à-dire un décodage classique de canal basé par exemple sur un décodeur de Viterbi, ....

Matériellement, l'ensemble de l'étage numérique ETN peut être réalisé par exemple par un processeur de traitement du signal, les différents traitements effectués dans cet étage ETN étant réalisés de façon logicielle. Ces traitements sont alors sous forme de code programme pouvant être aisément écrits par l'homme du métier à partir de la définition fonctionnelle de ces traitements. Les moyens de code programme sont alors par exemple stockés dans une mémoire morte associée au processeur. Ceci étant, une réalisation entièrement matérielle (hardware) ou bien partiellement matérielle est également possible, par exemple sous forme d'un circuit intégré spécifique (ASIC).

Si l'on se réfère plus particulièrement à la figure 2, on voit que l'étage ETN comporte notamment, selon l'invention, des premiers moyens d'estimation EST1 aptes à effectuer une estimation de la réponse impulsionnelle du canal, des deuxièmes moyens d'estimation EST2 aptes à effectuer une estimation de la dérivée temporelle de cette réponse impulsionnelle du canal, et des moyens d'estimation de vitesse ESTV aptes à fournir une indication sur la vitesse de déplacement du récepteur TP à partir de la détermination d'un rapport comportant un dénominateur prenant en compte l'énergie de la réponse impulsionnelle estimée et un numérateur prenant en compte l'énergie de la dérivée temporelle estimée à cette réponse impulsionnelle.

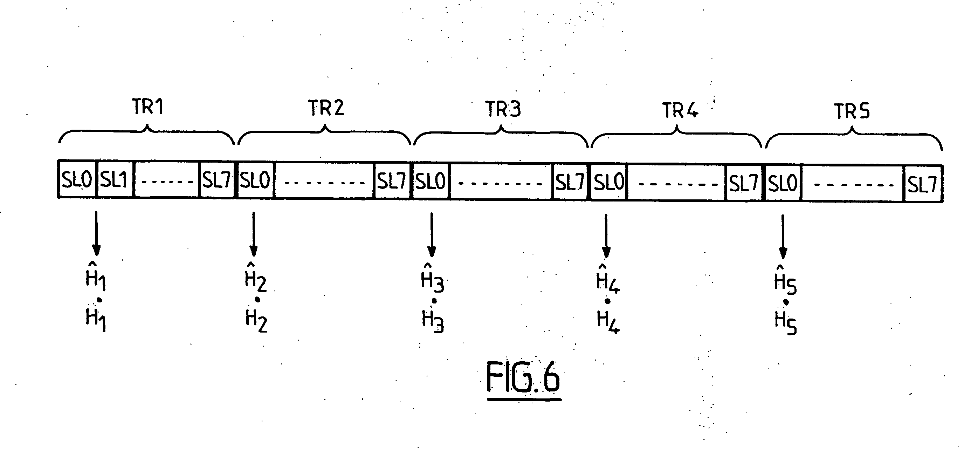

Comme illustré sur la figure 6, dans un système de transmission du type TR1, comme par exemple le système GSM, le canal de transmission est temporellement subdivisé en trames TRi, comportant chacune plusieurs intervalles temporels SLi («Slots» en langue anglaise).

En règle générale, la transmission des informations entre la station de base et le terminal s'effectue sur les trames successives au sein d'un seul intervalle temporel de chaque trame. En d'autres termes, un «slot» est attribué au téléphone au sein de chaque trame, par exemple l'intervalle SL0.

Ceci étant, il est possible, dans certaines applications, d'avoir une transition dite «multislots». Dans ce cas, la transmission des informations entre la station de base et le terminal s'effectue au sein de plusieurs intervalles temporels consécutifs de chaque trame, par exemple au sein de deux intervalles temporels consécutifs. En d'autres termes, dans ce cas, deux intervalles temporels consécutifs sont alloués au téléphone au sein de chaque trame, par exemple les intervalles SL0 et SL1.

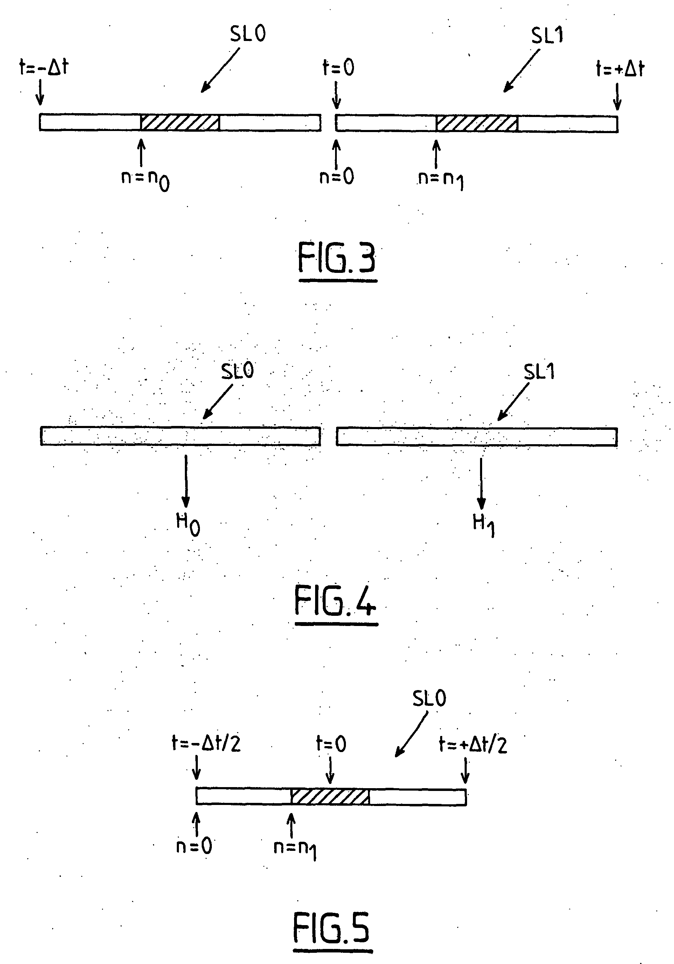

Dans une première variante de l'invention, comme illustré sur la figure 3, on suppose que l'on est en présence d'une transmission «multislots». A titre indicatif, dans chaque trame, les intervalles SL0 et SL1 sont alloués au téléphone TP. La réponse impulsionnelle h du canal de transmission peut être approximée au premier ordre et sur un intervalle de temps suffisamment court, par la formule (I) :

$$h(t,\tau) = \hat{h}(t_0,\tau) + (t - t_0) \cdot \dot{\hat{h}}(t_0,\tau) \qquad (I)$$

dans laquelle t désigne le temps.

L'homme du métier sait par ailleurs que chaque intervalle comporte un certain nombre de symboles $s_n$ et en particulier une séquence de symboles connus, communément désignée par l'homme du métier sous la dénomination de séquence d'entraînement.

Si l'on effectue un changement d'origine, dans lequel on suppose que $t_0 = 0$, on obtient alors avec les notations de la figure 3, un intervalle SL1 débutant à l'instant 0, se finissant à l'instant $+\Delta t$. Par ailleurs, les n symboles composant cet intervalle débutent à n=0. La séquence d'entraînement débute quant à elle au symbole de rang $n_1$.

De même, l'intervalle précédent SL0 débute à l'instant $-\Delta t$ et la séquence d'entraînement débute au symbole de rang $-n_0$.

Si l'on désigne par s(t) le signal à transmettre, celui-ci est composé de symbole $s_n$ et est défini par la formule (II) ci-dessous :

$$s(t) = \sum_n s_n \cdot \delta(t - n \cdot Ts) \qquad (II)$$

Dans cette formule, Ts désigne la durée entre deux symboles et la fonction $\delta$ est une fonction en peigne (Dirac). Plus précisément, $\delta(t-n.Ts)$ est égal à 1 lorsque t=n.Ts et est égal à 0 dans le cas contraire.

Le signal reçu au niveau du téléphone peut être approximé au premier ordre et sur un intervalle de temps suffisamment court, par la formule (III) ci-dessous :

$$x(t) = s(t) * h(t, \tau) = \int s(t - \tau) \cdot h(t, \tau) \cdot d\tau \qquad (III)$$

Par conséquent, l'échantillon reçu $x_n$ s'écrit conformément à la formule (IV) ci-dessous :

$$x_n = \sum_{k=0}^{L-1} S_{n-k} \cdot \left[ \hat{h}_k + n.Ts.\dot{h}_k \right] \qquad (IV)$$

dans laquelle $\hat{h}_k$ désigne les L coefficients de la réponse optionnelle estimée du canal et $\dot{h}_k$ désigne les coefficients de la dérivée temporelle de cette réponse impulsionnelle.

En formant l'hypothèse, non nécessaire cependant, que la même séquence d'entraînement de 26 symboles connus a été utilisée dans les deux intervalles consécutifs SL0 et SL1, on a alors, pour $0 \leq m < 26$ :

$$s_{-n_0 + m} = s_{n_1 + m} = t_m$$

En définissant ensuite deux nouvelles variables $N_0$ et $N_1$ respectivement par les formules (VI) et (VII) ci-dessous :

$$-N_0 = -n_0 + L - 1 \qquad (VI)$$

$$N_1 = n_1 + L - 1 \qquad (VII) ,$$

on obtient alors un jeu de 2.(26-L+1) équations avec 2.L inconnues, tel que défini ci-dessous pour $0 \leq m < 26-L+1$ :

$$\begin{cases} x_{-N_0+m} = \displaystyle\sum_{k=0}^{L-1} t_{L-1+m-k} \cdot \left[ \hat{h}_k + (-N_0+m) \cdot Ts \cdot \dot{h}_k \right] \\[2mm] x_{N_1+m} = \displaystyle\sum_{k=0}^{L-1} t_{L-1+m-k} \cdot \left[ \hat{h}_k + (N_1+m) \cdot Ts \cdot \dot{h}_k \right] \end{cases} \quad (VIII)$$

La résolution de ce système d'équation (VIII) par toute méthode classique, par exemple une méthode des moindres carrés, permet d'obtenir conjointement les coefficients de la réponse impulsionnelle estimée du canal de transmission et les coefficients de la dérivée temporelle de cette réponse impulsionnelle estimée.

Dans une autre variante de l'invention, également compatible avec une transmission «multislots», il est possible, comme illustré sur la figure 4, d'estimer la réponse impulsionnelle du canal et sa dérivée temporelle à partir de deux estimations successives indépendantes $H_0$ et $H_1$, respectivement effectuées au cours des deux intervalles consécutifs SL0 et SL1.

Chacune des deux réponses impulsionnelles est estimée par toute méthode connue, comme par exemple une méthode de moindres carrés, ou encore dans le cas où les séquences d'entraînement ne sont pas disponibles, par une estimation dite «aveugle», c'est-à-dire dans laquelle on n'utilise pas de séquence d'entraînement prédéterminée.

L'homme du métier connaît diverses méthodes permettant d'effectuer les estimations aveugles de la réponse impulsionnelle d'un canal. A titre indicatif, on peut citer l'article de Jitendra K. Tugnait, intitulé « Blind Estimation Of Digital Communication Channel Impulse Response », IEEE Transactions On Communications, Vol. 42, N° 2/3/4, February/March/April 1994.

L'estimation de la réponse impulsionnelle du canal est alors obtenue conformément à la formule (IX) ci-dessous par la moyenne des deux estimations successives indépendantes $H_0$ et $H_1$.

L'estimation de la dérivée temporelle s'effectue par la détermination de la variation temporelle sur la durée $\Delta t$ séparant les deux estimations, entre ces deux estimations successives indépendantes $H_1$ et $H_0$, également conformément à la formule (IX) ci-dessous :

$$\begin{cases} \hat{H} = (H_1 + H_0)/2 \\[2mm] \dot{H} = (H_1 - H_0)/\Delta t \end{cases} \quad (IX)$$

Lorsque la transmission n'est pas une transmission «multislots», mais qu'elle s'effectue au sein d'un seul intervalle alloué au téléphone, par exemple l'intervalle SL0, l'estimation de la réponse impulsionnelle du canal et l'estimation de sa dérivée temporelle s'effectuent à partir des informations reçues au cours de ce seul intervalle temporel.

Plus précisément, si l'on se réfère à la figure 5 et si l'on reprend les mêmes notations que celles utilisées en relation avec la figure 3 et avec les formules (I) à (VIII) ci-dessus, les échantillons du signal reçu sont alors définis par la formule (X) ci-dessous pour $0 \le m < 26-L+1$.

$$x_{N_1+m} = \sum_{k=0}^{L-1} t_{L-1+m-k} \cdot \left[ \hat{h}_k + \left( \frac{L-26}{2} + m \right) \cdot Ts \cdot \dot{h}_k \right] \quad (X)$$

On a cette fois-ci un jeu de 26-L+1 équations avec 2L inconnues.

Un tel système peut se résoudre également par la méthode des moindres carrés, mais donne toutefois une estimation moins précise que celle obtenue avec la variante de transmission «multislots»

Quelle que soit la variante utilisée, les moyens d'estimation de vitesse MEST vont, d'une façon générale, déterminer l'énergie $\hat{E}$ de la réponse impulsionnelle estimée du canal. Cette énergie $\hat{E}$ est définie par la formule (XI) ci-dessous :

$$\hat{E} = \sum_i \left| \hat{h}_i \right|^2 \quad (XI)$$

Par ailleurs, les moyens d'estimation de vitesse vont de la même façon déterminer l'énergie $\dot{E}$ de la dérivée temporelle de la réponse impulsionnelle estimée conformément à la formule (XII) ci-dessous :

$$\dot{E} \;=\; \sum_i \left| \dot{h}_i \right|^2 \qquad (XII)$$

Le rapport $\dot{E}/\hat{E}$ est alors relié à la vitesse V de déplacement du téléphone conformément à la formule (XIII) ci-dessous :

$$\dot{E}/\hat{E} \;=\; 2\ \Pi^2\ FO\ V^2/C \qquad (XIII)$$

Le principe général de l'invention qui vient d'être décrit, est mis en oeuvre en pratique pour tenir compte du bruit qui entache généralement les estimations de la réponse impulsionnelle du canal et de sa dérivée.

Aussi, pour tenir compte du bruit et lisser les variations éventuelles, il est particulièrement avantageux que les moyens d'estimation effectuent une première moyenne, par exemple une moyenne glissante, de valeurs successives d'énergie correspondant à des réponses impulsionnelles du canal successivement estimées à des instants successifs.

De même, les moyens d'estimation de vitesse effectuent une deuxième moyenne, également une moyenne glissante par exemple, de valeurs successives d'énergie correspondant aux dérivées temporelles des réponses impulsionnelles successivement estimées.

Plus précisément, si l'on se réfère à la figure 6, les instants successifs se situent au sein des trames successives Tri. Chaque trame Tri permet d'obtenir, pour le téléphone TP, à un instant prédéterminé qui dépend de la variante utilisée, une estimation $H_i$ de la réponse impulsionnelle du canal et une estimation $\dot{H}_i$ de sa dérivée temporelle. A partir de ces deux valeurs, on calcule l'énergie $\hat{E}_i$ et l'énergie $\dot{E}_i$ correspondant à la trame Tri. La première moyenne glissante $m_i$ est définie alors par la formule (XIV) :

$$m_i = (1-\alpha)m_{i-1} + \alpha\ \hat{\dot{E}}_i \qquad (XIV)$$

la deuxième moyenne glissante $p_i$ est définie par la formule (XV) :

$$p_i = (1 - \alpha)p_{i-1} + \alpha\ \dot{E}_i \qquad (XV)$$

Dans ces deux formules, le coefficient $\alpha$ est un coefficient qui varie entre 0 et 1, et qui peut prendre des valeurs différentes dans les deux formules. Si $\alpha$ est proche de 1, on a alors une bonne réactivité, c'est-à-dire que l'on prend fortement en compte la nouvelle mesure et l'on va négliger la moyenne passée.

Si par contre $\alpha$ est proche de 0, on s'appuie sur la moyenne précédente.

L'homme du métier saura ajuster la valeur de $\alpha$ en fonction de l'application envisagée.

Le rapport $p_i/m_i$ donne une estimation de la vitesse de déplacement du mobile.

Par ailleurs, le bruit d'estimation sur les coefficients de la réponse impulsionnelle et de sa dérivée entraîne un biais sur l'estimation de leur énergie. Lorsque l'énergie moyenne du bruit d'estimation est connue, en particulier dans le système GSM, il est préférable de retrancher cette énergie pour obtenir des estimations non biaisées. Aussi, est-il préférable, de retrancher l'énergie moyenne du bruit des valeurs correspondantes d'énergie E et $\dot{E}$ avant d'effectuer le rapport qui va fournir une estimation de la vitesse de déplacement du mobile.

L'invention n'est pas limitée aux modes de réalisation et exemples qui viennent d'être décrits, mais en embrasse toutes les variantes. Ainsi, alors que l'on a évoqué plus précisément les systèmes utilisant une division de fréquence et/ou une division temporelle (TDMA et/ou FDMA) tels que ceux appliqués dans le GSM, l'invention s'applique également aux systèmes CDMA qui permettent aux utilisateurs multiples de partager une fréquence commune et un canal temporel commun en utilisant une modulation codée.

A titre indicatif, on peut citer le système CDMA 2000, le système WCDMA ou la norme IS95.

Par ailleurs, l'invention peut être également mise en oeuvre et réalisée dans une station de base SB.

**Revendications**

1. Procédé d'estimation de la vitesse de déplacement d'un terminal mobile d'un système de communication sans fil dialoguant avec une station par l'intermédiaire d'un canal de transmission, dans lequel l'estimation de la vitesse comporte une estimation de la réponse impulsionnelle (H) du canal de transmission à un instant donné, une estimation de la dérivée temporelle (H) de cette réponse impulsionnelle estimée, **caractérisé en ce qu'**il comporte en plus une détermination d'un rapport comportant un dénominateur prenant en compte l'énergie de la réponse impulsionnelle estimée et un numérateur prenant en compte l'énergie de la dérivée temporelle estimée de cette réponse impulsionnelle.

2. Procédé selon la revendication 1, dans lequel l'estimation de la réponse impulsionnelle du canal est effectuée par la moyenne de deux estimations successives indépendantes ($H_0$, $H_1$) de la réponse impulsionnelle du canal temporellement séparées d'une durée prédéterminée choisie ($\Delta$) de façon à préserver une corrélation entre les deux réponses impulsionnelles successivement estimées, et dans lequel l'estimation de la dérivée temporelle s'effectue par la détermination de la variation temporelle sur ladite durée prédéterminés, entre les deux estimations successives indépendantes de la réponse impulsionnelle.

3. Procédé selon la revendication 2, dans lequel le canal de transmission est temporellement subdivisé en trames (TRi) comportant chacune plusieurs intervalles temporels, dans lequel la transmission des informations entre la station de base et le terminal s'effectue sur des trames successives au sein d'au moins deux intervalles temporels consécutifs de chaque trame, et dans lequel les deux estimations successives indépendantes de la réponse impulsionnelle du canal sont respectivement effectuées à partir des informations rspectivement reçues au cours des deux intervalles temporels consécutifsn (SL0, SL1).

4. Procédé selon la revendication 1, dans lequel le canal de transmission est temporellement subdivisé en trames comportant chacune plusieurs intervalles temporels, dans lequel la transmission des informations entre la station de base et le terminal s'effectue sur des trames successives au sein d'au moins deux intervalles temporels consécutifs de chaque trame, et dans lequel l'estimation de la réponse impulsionnelle du canal et l'estimation de sa dérivée temporelle sont effectuées conjointement à partir des informations reçues au cours des deux intervalles consécutifs (SL0, SL1).

5. Procédé selon la revendication 1, dans lequel le canal de transmission est temporellement subdivisé en trames comportant chacune plusieurs intervalles temporels, dans lequel la transmission des informations entre la station de base et le terminal s'effectue sur des trames successives au sein d'un seul intervalle temporel de chaque trame, et dans lequel l'estimation de la réponse impulsionnelle du canal et l'estimation de sa dérivée temporelle s'effectuent à partir des informations reçues au cours dudit seul intervalle temporel (SL0).

6. Procédé selon l'une des revendications précédentes, dans lequel les estimations de la réponse impulsionnelle du canal et de sa dérivée sont entachées par du bruit, et dans lequel pour déterminer le numérateur et le dénominateur on retranche l'énergie moyenne du bruit des deux valeurs correspondantes d'énergie

7. Procédé selon l'une des revendications précédentes, dans lequel le dénominateur dudit rapport résulte d'une première moyenne par exemple une moyenne glissante, de valeurs successives d'énergies correspondant à des réponses impulsionnelles successivement estimées à des instants successifs, dans lequel le numérateur dudit rapport résulte d'une deuxième moyenne, par exemple une moyenne glissante, de valeurs successives d'énergies correspondant aux dérivées temporelles des réponses impulsionnelles successivement estimées.

8. Dispositif d'estimation de la vitesse de déplacement d'un terminal mobile d'un système de communication sans fil dialoguant avec une station par l'intermédiaire d'un canal de transmission, comprenant

   . des premiers moyens d'estimation (EST1) aptes à effectuer une estimation de la réponse impulsionnelle du canal de transmission à un instant donné,
   . des deuxièmes moyens d'estimation (EST2) aptes à effectuer une estimation de la dérivée, temporelle de cette réponse impulsionnelle estimée,

   et **caractérisé par le fait qu'**il comprend en outre des moyens d'estimation de vitesse (ESTV) comportant des premiers moyens de détermination aptes à déterminer un dénominateur prenant en compte l'énergie de la réponse impulsionnelle estimée, des deuxièmes moyens de détermination aptes à déterminer un numérateur prenant en compte l'énergie de la dérivée temporelle estimée de cette réponse impulsionnelle, et des moyens de calcul aptes à effectuer le rapport entre le numérateur et le dénominateur.

**9.** Dispositif selon la revendication 8, dans lequel les premiers moyens d'estimation (EST1) sont aptes à effectuer l'estimation de la réponse impulsionnelle du canal par la moyenne de deux estimations indépendantes successives de la réponse impulsionnelle du canal temporellement séparées d'une durée prédéterminée choisie de façon à préserver une corrélation entre les deux réponses impulsionnelles indépendantes successivement estimées, et dans lequel les deuxièmes moyens d'estimation (EST2) sont aptes à effectuer l'estimation de la dérivée temporelle par la détermination de la variation temporelle sur ladite durée prédéterminée, entre les deux estimations indépendantes successives de la réponse impulsionnelle.

**10.** Dispositif selon la revendication 9, dans lequel le canal de transmission est temporellement subdivisé en trames comportant chacune plusieurs intervalles temporels, par le fait que la transmission des informations entre la station de base et le terminal s'effectue sur des trames successives au sein d'au moins deux intervalles temporels consécutifs de chaque trame, et dans lequel les premiers moyens d'estimation (EST1) effectuent respectivement les deux estimations successives de la réponse impulsionnelle du canal à partir des informations respectivement reçues au cours des deux intervalles temporels consécutifs.

**11.** Dispositif selon la revendication 8, dans lequel le canal de transmission est temporellement subdivisé en trames comportant chacune plusieurs intervalles temporels, par le fait que la transmission des informations entre la station de base et le terminal s'effectue sur des trames successives au sein d'au moins deux intervalles temporels consécutifs de chaque trame, et dans lequel les premiers moyens d'estimation (EST1) et les deuxièmes moyens d'estimation (EST2) effectuent conjointement l'estimation de la réponse impulsionnelle du canal et l'estimation de sa dérivée temporelle à partir des informations reçues au cours des deux intervalles consécutifs.

**12.** Dispositif selon la revendication 8, dans lequel le canal de transmission est temporellement subdivisé en trames comportant chacune plusieurs intervalles temporels, dans lequel la transmission des informations entre la station de base et le terminal s'effectue sur des trames successives au sein d'un seul intervalle temporel de chaque trame, et dans lequel les premiers moyens d'estimation (EST1) effectuent l'estimation de la réponse impulsionnelle du canal et de sa dérivée temporelle à partir des informations reçues au cours dudit seul intervalle temporel.

**13.** Dispositif selon l'une des revendications 8 à 12, dans lequel les estimations de la réponse impulsionnelle du canal et de sa dérivée sont entachées par du bruit, et dans lequel les premiers et deuxièmes moyens de détermination comportent des moyens de soustraction aptes à retrancher des deux valeurs correspondantes d'énergie, l'énergie moyenne du bruit.

**14.** Dispositif selon l'une des revendications 8 à 13, dans lequel les premiers moyens de détermination comportent des premiers moyens de lissage aptes à effectuer une première moyenne par exemple une moyenne glissante, de valeurs successives d'énergies correspondant à des réponses impulsionnelles successivement estimées à des instants successifs, et par le fait que les deuxièmes moyens de détermination comportent des deuxièmes moyens de lissage aptes à effectuer une deuxième moyenne, par exemple une moyenne glissante, de valeurs successives d'énergies correspondant aux dérivées temporelles des réponses impulsionnelles successivement estimées.

**15.** Terminal mobile distant d'un système de communication sans fil, **caractérisé par le fait qu'**il comporte un dispositif selon l'une des revendications 8 à 14.

**16.** Station de base d'un système de communication sans fil, **caractérisée par le fait qu'**elle comporte un dispositif selon l'une des revendications 8 à 14.

**Patentansprüche**

**1.** Verfahren zur Abschätzung der Geschwindigkeit der Fortbewegung eines über einen Übertragungskanal mit einer Station in Dialog stehenden mobilen Endgeräts eines drahtlosen Kommunikationssystems, in welchem Verfahren die Abschätzung der Geschwindigkeit eine Abschätzung der Impulsantwort (H) des Übertragungskanals zu einem gegebenen Zeitpunkt und eine Abschätzung der zeitlichen Ableitung (H) dieser abgeschätzten Impulsantwort aufweist, **dadurch gekennzeichnet, daß** es ferner eine Ermittlung eines Verhältnisses aufweist, das einen Neriner, der die Energie der abgeschätzten Impulsantwort berücksichtigt, und einen Zähler aufweist, der die Energie der abgeschätzten zeitlichen Ableitung dieser Impulsantwort berücksichtigt.

**2.** Verfahren nach Anspruch 1, in welchem die Abschätzung der Impulsantwort des Kanals mit dem Mittelwert von zwei aufeinanderfolgenden unabhängigen Abschätzungen ($H_0$,$H_1$) der Impulsantwort des Kanals durchgeführt wird, die um eine vorgegebene Zeitdauer ($\Delta t$) zeitlich beabstandet sind, die so gewählt ist, um eine Korrelation zwischen den zwei nacheinander abgeschätzten Impulsantworten zu bewahren, und in welchem die Abschätzung der zeitlichen Ableitung durch die Ermittlung der zeitlichen Änderung über diese vorgegebene Zeitdauer zwischen den zwei aufeinanderfolgenden unabhängigen Abschätzungen der Impulsantwort durchgeführt wird.

**3.** Verfahren nach Anspruch 2, in welchem der Übertragungskanal zeitlich in Rahmen (TRi) unterteilt ist, die jeweils mehrere Zeitintervalle aufweisen, in welchem die Übertragung von Daten zwischen der Basisstation und dem Endgerät über aufeinanderfolgende Rahmen in mindestens zwei aufeinanderfolgenden Zeitintervallen jedes Rahmens erfolgt, und in welchem ausgehend von Daten, die jeweils während der zwei aufeinanderfolgenden Zeitintervalle (SL0, SL1) empfangen werden, jeweils die zwei aufeinanderfolgenden unabhängigen Abschätzungen der Impulsantwort des Kanals durchgeführt werden.

**4.** Verfahren nach Anspruch 1, in welchem der Übertragungskanal zeitlich in Rahmen unterteilt ist, die jeweils mehrere Zeitintervalle aufweisen, in welchem die Übertragung von Daten zwischen der Basisstation und dem Endgerät über aufeinanderfolgende Rahmen in mindestens zwei aufeinanderfolgenden Zeitintervallen jedes Rahmens erfolgt, und in welchem ausgehend von Daten, die jeweils während der zwei aufeinanderfolgenden Intervalle (SL0, SL1) empfangen werden, die Abschätzung der Impulsantwort des Kanals und die Abschätzung ihrer zeitlichen Ableitung gemeinsam durchgeführt wird.

**5.** Verfahren nach Anspruch 1, in welchem der Übertragungskanal zeitlich in Rahmen unterteilt ist, die jeweils mehrere Zeitintervalle aufweisen, in welchem die Übertragung von Daten zwischen der Basisstation und dem Endgerät über aufeinanderfolgende Rahmen in einem einzigen Zeitintervall jedes Rahmens erfolgt, und in welchem ausgehend von Daten., die während des einzigen Zeitintervalls (SL0) empfangen werden, die Abschätzung der Impulsantwort des Kanals und die Schätzung ihrer zeitlichen Ableitung durchgeführt wird.

**6.** Verfahren nach einem der vorstehenden Ansprüche, in welchem die Abschätzungen der Impulsantwort des Kanals und ihrer Ableitung mit Rauschen behaftet sind, und in welchem zum Ermitteln des Zählers und des Nenners die durchschnittliche Energie des Rauschens von den zwei entsprechenden Energiewerten abgezogen wird.

**7.** Verfahren nach einem der vorstehenden Ansprüche, in welchem sich der Nenner des Verhältnisses aus einem ersten Mittelwert, beispielsweise einem gleitenden Mittelwert, von aufeinanderfolgenden Energiewerten ergibt, die zu nacheinander an aufeinanderfolgenden Zeitpunkten abgeschätzten Impulsantworten gehören, in welchem sich der Zähler des Verhältnisses aus einem zweiten Mittelwert, beispielsweise einem gleitenden Mittelwert, von aufeinanderfolgenden Energiewerten ergibt, die zu zeitlichen Ableitungen von nacheinander abgeschätzten Impulsantworten gehören.

**8.** Vorrichtung zur Abschätzung der Geschwindigkeit der Fortbewegung eines über einen Übertragungskanal mit einer Basisstation in Dialog stehenden mobilen Endgeräts eines drahtlosen Kommunikationssystems, mit:

- ersten Abschätzungseinrichtungen (EST1), die in der Lage sind, an einem gegebenen Zeitpunkt eine Abschätzung der Impulsantwort des Übertragungskanals durchzuführen,
- zweiten Abschätzungseinrichtungen (EST2), die in der Lage sind, eine Abschätzung der zeitlichen Ableitung dieser abgeschätzten Impulsantwort durchzuführen,

und **dadurch gekennzeichnet, daß** die Vorrichtung ferner aufweist:

- Einrichtungen (ESTV) zum Abschätzen der Geschwindigkeit, mit ersten Ermittlungseinrichtungen, die in der Lage sind, unter Berücksichtigung der Energie der abgeschätzten Impulsantwort einen Nenner zu ermitteln, zweiten Ermittlungseinrichtungen, die in der Lage sind, unter Berücksichtigung der Energie der abgeschätzten zeitlichen Ableitung dieser Impulsantwort einen Zähler zu ermitteln, und Berechnungseinrichtungen, die in der Lage sind, das Verhältnis zwischen dem Zähler und dem Nenner zu bilden.

**9.** Vorrichtung nach Anspruch 8, in welcher die ersten Abschätzungseinrichtungen (EST1) in der Lage sind, die Abschätzung der Impulsantwort des Kanals mit dem Mittelwert von zwei aufeinanderfolgenden unabhängigen Abschätzungen der Impulsantwort des Kanals durchzuführen, die um eine vorgegebene Zeitdauer zeitlich beabstandet sind, die so gewählt ist, um eine Korrelation zwischen den zwei nacheinander abgeschätzten unabhängigen Impulsantworten zu bewahren, und in welcher die zweiten Abschätzungseinrichtungen (EST2) in der Lage sind, die Abschätzung der zeitlichen Ableitung durch die Ermittlung der zeitlichen Änderung über die vorgegebene Zeitdauer zwischen den zwei aufeinanderfolgenden unabhängigen Abschätzungen der Impulsantwort durchzuführen.

10. Vorrichtung nach Anspruch 9, in welcher der Übertragungskanal zeitlich in Rahmen unterteilt ist, die jeweils mehrere Zeitintervalle aufweisen, in welcher die Übertragung von Daten zwischen der Basisstation und dem Endgerät über aufeinanderfolgende Rahmen in mindestens zwei aufeinanderfolgenden Zeitintervallen jedes Rahmens erfolgt und in welcher ausgehend von Daten, die jeweils während der zwei aufeinanderfolgenden Zeitintervalle empfangen werden, die ersten Abschätzungseinrichtungen (EST1) jeweils die zwei aufeinanderfolgenden Abschätzungen der Impulsantwort des Kanals durchführen.

11. Vorrichtung nach Anspruch 8, in welcher der Übertragungskanal zeitlich in Rahmen unterteilt ist, die jeweils mehrere Zeitintervalle aufweisen, in welcher die Übertragung von Daten zwischen der Basisstation und dem Endgerät über aufeinanderfolgende Rahmen in mindestens zwei aufeinanderfolgenden Zeitintervallen jedes Rahmens erfolgt und in welcher ausgehend von Daten, die jeweils während der zwei aufeinanderfolgenden Zeitintervalle empfangen werden, die ersten Abschätzungseinrichtungen (EST1) und die zweiten Abschätzungseinrichtungen (EST2) gemeinsam die Abschätzung der Impulsantwort des Kanals und die Abschätzung ihrer zeitlichen Ableitung durchführen.

12. Vorrichtung nach Anspruch 8, in welcher der Übertragungskanal zeitlich in Rahmen unterteilt ist, die jeweils mehrere Zeitintervalle aufweisen, in welcher die Übertragung von Daten zwischen der Basisstation und dem Endgerät über aufeinanderfolgende Rahmen in einem einzigen Zeitintervall jedes Rahmens erfolgt, und in welcher ausgehend von Daten, die während des einzigen Zeitintervalls empfangen werden, die ersten Abschätzungseinrichtungen (EST1) die Abschätzung der Impulsantwort des Kanals und die Abschätzung ihrer zeitlichen Ableitung durchführen.

13. Vorrichtung nach einem der Ansprüche 8 bis 12, in welcher die Abschätzungen der Impulsantwort des Kanals und ihrer Ableitung mit Rauschen behaftet sind, und in welcher die ersten und zweiten Ermittlungseinrichtungen Subtraktionseinrichtungen aufweisen, die in der Lage sind, von den zwei entsprechenden Energiewerten die durchschnittliche Energie des Rauschens abzuziehen.

14. Vorrichtung nach einem der Ansprüche 8 bis 13, in welcher die ersten Ermittlungseinrichtungen erste Glättungseinrichtungen aufweisen, die in der Lage sind, einen ersten Mittelwert, beispielsweise einen gleitenden Mittelwert, von aufeinanderfolgenden Energiewerten zu bilden, die zu nacheinander an aufeinanderfolgenden Zeitpunkten abgeschätzten Impulsantworten gehören, und in welcher die zweiten Ermittlungseinrichtungen zweite Glättungseinrichtungen aufweisen, die in der Lage sind, einen zweiten Mittelwert, beispielsweise einen gleitenden Mittelwert, von aufeinanderfolgenden Energiewerten zu bilden, die zu zeitlichen Ableitungen der nacheinander abgeschätzten Impulsantworten gehören.

15. Mobiles Fernendgerät eines drahtlosen Kommunikationssystems, **dadurch gekennzeichnet, daß** es eine Vorrichtung nach einem der Ansprüche 8 bis 14 aufweist.

16. Basisstation eines drahtlosen Kommunikationssystems, **dadurch gekennzeichnet, daß** sie eine Vorrichtung nach einem der Ansprüche 8 bis 14 aufweist.

**Claims**

1. Process for estimating the speed of movement of a mobile terminal of a wireless communication system talking to a station by way of a transmission channel, in which the estimation of the speed comprises an estimation of the impulse response (H) of the transmission channel at a given instant, an estimation of the time derivative ($\dot{H}$) of this estimated impulse response, **characterized in that** it additionally comprises a determination of a ratio comprising a denominator taking into account the energy of the estimated impulse response and a numerator taking into account the energy of the estimated time derivative of this impulse response.

2. Process according to Claim 1, in which estimation of the impulse response of the channel is performed by averaging two independent successive estimations ($H_0$, $H_1$) of the impulse response of the channel, temporally separated by a chosen predetermined duration ($\Delta t$) in such a way as to preserve a correlation between the two successively estimated impulse responses, and in which the estimation of the time derivative is performed by determining the time variation over the said predetermined duration, between the two independent successive estimations of the impulse response.

3. Process according to Claim 2, in which the transmission channel is temporally subdivided into frames (TRi) each comprising several time intervals, in which the transmission of the information between the base station and the terminal is performed over successive frames within at least two consecutive time intervals of each frame, and in which the two independent successive estimations of the impulse response of the channel are performed on the basis of the respective information received in the course of the two respective consecutive time intervals (SL0, SL1).

4. Process according to Claim 1, in which the transmission channel is temporally subdivided into frames each comprising several time intervals, in which the transmission of the information between the base station and the terminal is performed over successive frames within at least two consecutive time intervals of each frame, and in which the estimation of the impulse response of the channel and the estimation of its time derivative are performed jointly on the basis of the information received in the course of the two consecutive intervals (SL0, SL1).

5. Process according to Claim 1, in which the transmission channel is temporally subdivided into frames each comprising several time intervals, in which the transmission of the information between the base station and the terminal is performed over successive frames within a single time interval of each frame, and in which the estimation of the impulse response of the channel and the estimation of its time derivative are performed on the basis of the information received in the course of the said single time interval (SL0).

6. Process according to one of the preceding claims, in which the estimations of the impulse response of the channel and of its derivative are spoilt by noise, and in which to determine the numerator and the denominator, the mean energy of the noise is deducted from the two corresponding values of energy.

7. Process according to one of the preceding claims, in which the denominator of the said ratio results from a first average, for example a sliding average, of successive values of energies corresponding to impulse responses successively estimated at successive instants, in which the numerator of the said ratio results from a second average, for example a sliding average, of successive values of energies corresponding to the time derivatives of the successively estimated impulse responses.

8. Device for estimating the speed of movement of a mobile terminal of a wireless communication system talking to a station by way of a transmission channel, comprising

   • first means of estimation (EST1) able to perform an estimation of the impulse response of the transmission channel at a given instant,
   • second means of estimation (EST2) able to perform an estimation of the time derivative of this estimated impulse response,

   and **characterized in that** it further comprises means of estimation of speed (ESTV) comprising first means of determination able to determine a denominator taking into account the energy of the estimated impulse response, second means of determination able to determine a numerator taking into account the energy of the estimated time derivative of this impulse response, and means of calculation able to compute the ratio of the numerator to the denominator.

9. Device according to Claim 8, in which the first means of estimation (EST1) are able to perform the estimation of the impulse response of the channel by averaging two independent successive estimations of the impulse response of the channel, temporally separated by a chosen predetermined duration in such a way as to preserve a correlation between the two successively estimated independence impulse responses, and in which the second means of estimation (EST2) are able to perform the estimation of the time derivative by determining the time variation over the said predetermined duration, between the two independent successive estimations of the impulse response.

10. Device according to Claim 9, in which the transmission channel is temporally subdivided into frames each comprising several time intervals, in that the transmission of the information between the base station and the terminal is performed over successive frames within at least two consecutive time intervals of each frame and in which the first means of estimation (EST1) perform the two respective successive estimations of the impulse response of the channel on the basis of the information received in the course of the two respective consecutive time intervals.

**11.** Device according to Claim 8, in which the transmission channel is temporally subdivided into frames each comprising several time intervals, in which the transmission of the information between the base station and the terminal is performed over successive frames within at least two consecutive time intervals of each frame and in that the first means of estimation (EST1) and the second means of estimation (EST2) jointly perform the estimation of the impulse response of the channel and the estimation of its time derivative on the basis of the information received in the course of the two consecutive intervals.

**12.** Device according to Claim 8, in which the transmission channel is temporally subdivided into frames each comprising several time intervals, in which the transmission of the information between the base station and the terminal is performed over successive frames within a single time interval of each frame, and in which the first means of estimation (EST1) perform the estimation of the impulse response of the channel and of its time derivative on the basis of the information received in the course of the said single time interval.

**13.** Device according to one of Claims 8 to 12, in which the estimations of the impulse response of the channel and of its derivative are spoilt by noise, and in which the first and second means of determination comprise means of subtraction able to deduct the mean energy of the noise from the two corresponding values of energy.

**14.** Device according to one of Claims 8 to 13, in which the first means of determination comprise first means of smoothing able to compute a first average, for example a sliding average, of successive values of energies corresponding to impulse responses successively estimated at successive instants, and in which the second means of determination comprise second means of smoothing able to compute a second average for example a sliding average, of successive values of energies corresponding to the time derivatives of the successively estimated impulse responses.

**15.** Remote mobile terminal of a wireless communication system, **characterized in that** it comprises a device according to one of Claims 8 to 14.

**16.** Base station of a wireless communication system, **characterized in that** it comprises a device according to one of Claims 8 to 14.

FIG.1

FIG.2

SL0

$t=-\Delta t$

$t=0$

SL1

$t=+\Delta t$

$n=n_0$

$n=0$

$n=n_1$

## FIG.3

SL0

SL1

$H_0$

$H_1$

## FIG.4

SL0

$t=-\Delta t/2$

$t=0$

$t=+\Delta t/2$

$n=0$

$n=n_1$

## FIG.5

TR1    TR2    TR3    TR4    TR5

| SL0 | SL1 | ------ | SL7 | SL0 | --------- | SL7 | SL0 | --------- | SL7 | SL0 | ------- | SL7 | SL0 | ------- | SL7 |

$\hat{H}_1$

$H_1$

$\hat{H}_2$

$H_2$

$\hat{H}_3$

$H_3$

$\hat{H}_4$

$H_4$

$\hat{H}_5$

$H_5$

FIG.6

EP 1 288 674 B1